Europäisches Patentamt

European Patent Office

Office européen des brevets

(11) Publication number: **0 052 925**
**B1**

(12) **EUROPEAN PATENT SPECIFICATION**

(45) Date of publication of patent specification: **28.03.84**

(21) Application number: **81304382.5**

(22) Date of filing: **23.09.81**

(51) Int. Cl.³: **C 04 B 7/44, F 27 D 13/00**

(54) Method and plant for treating granular or pulverous raw material.

(30) Priority: **25.11.80 GB 8037729**

(43) Date of publication of application:
**02.06.82 Bulletin 82/22**

(45) Publication of the grant of the patent:
**28.03.84 Bulletin 84/13**

(84) Designated Contracting States:
**BE DE FR GB IT LU NL**

(56) References cited:
**AU - B - 490 561**
**DE - A - 2 846 584**
**DE - A - 2 923 448**
**US - A - 4 127 406**

(73) Proprietor: **F.L. Smidth & Co. A/S**
**77 Vigerslev Allé**
**DK-2500 Valby Copenhagen (DK)**

(72) Inventor: **Touborg, Jorn**
**77 Vigerslev Alle**
**DK-2500 Valby Copenhagen (DK)**

(74) Representative: **Jackson, Peter Arthur et al,**
**GILL JENNINGS & EVERY 53-64 Chancery Lane**
**London WC2A 1HN (GB)**

Courier Press, Leamington Spa, England.

## Method and plant for treating granular or pulverous raw material

The invention relates to a method and apparatus for burning granular or pulverous raw material for instance cement raw material.

For many years manufacture of cement and the like has preferentially taken place in kiln plant including a rotary kiln allowing for, compared with shaft kilns, a continuous treatment of raw materials fed to the plant. The development of such rotary kiln plant has through recent times ungergone a change towards reducing the size of the mechanically rather complicated kiln construction by arranging some of the previous functions of the rotary kiln to take place in stationary parts of the plant such as separate preheating and precalcining installations. Such plants are known for example from British Patent Specifications Nos. 1,108,589, 1,434,091 and 1,428,828 according to which the rotary kiln carries out two functions in addition to the transport function of treated materials, namely heating from about 900°C to the reaction temperature in the kiln of the material precalcined in the precalcination zone, and providing retention time in the kiln for the reacting material under treatment.

The next logical step in this development is to move the heating function from the rotary kiln out into a separate, stationary installation thereby making it possible to reduce further the functions of the rotating plant installation. This reduction is attractive due to less overall construction costs and better running economy of the plant. A plant of this type is known from DE—A—2,846,584. However, the problem of moving the heating function to a stationary installation may be encumbered by the melting of say up to 20% of the material, which melting may make the charge stick and clog and therefore difficult to handle during further treatment in the plant.

It is therefore the object of the invention to devise a method and a kiln plant where the heating of the treated material to its reaction temperature takes place in a stationary burning installation and where the above mentioned problem concerning transportation of treated material in the plant is mitigated.

According to the present invention, a method of treating granular or pulverous raw material, e.g. cement raw material, comprises preheating and precalcining the raw material in suspension; separating the precalcined material from smoke gases; providing two separate subsidiary flows of the precalcined material; feeding one of the subsidiary flows to a stationary burning chamber for burning in suspension and at least partial melting of the material; separating this material from smoke gases and feeding it to a nodulising zone; feeding the other subsidiary material flow to the nodulising zone and mixing it with the material from the burning chamber whereby the mixed material is subjected to a final reaction and nodulisation during its retention in the nodulising zone; and feeding the material from the nodulising zone to a cooler.

The invention also includes a plant for carrying out this method, the plant comprising means for preheating and precalcining the raw material, means for providing the two separate subsidiary material flows, means for leading the one subsidiary flow to a stationary burning chamber, means for separating this material from smoke gases and feeding it to a rotating nodulisation chamber, means for leading the other subsidiary flow directly to the nodulisation chamber for mixing with the material from the burning chamber, and means for leading the nodulised product from the nodulisation chamber to a cooler.

After the treatment in a preheating zone for preheating the material, and in a precalcination zone for removal of carbon dioxide from the material, the material is separated and part fed to a reaction zone in a stationary burning chamber where significant burning of the material in suspension and melting takes place. Thereafter the at least partly melted material is separated from the hot gases and fed to a nodulising zone, preferably a rotating nodulising drum. The at least partly melted material may be mixed with other precalcined material either in or immediately before entering the nodulising zone. Powdery precalcined material fed directly to the nodulising zone coats the melted material particles so that the problem of sticking or clogging is mitigated. The mixture then undergoes a final reaction during its retention in the nodulising zone, the overall temperature of the mixture ensuring that the finished reaction including the nodulisation can preferably take place without the supply of any other heat to the nodulising zone other than that already contained in the material supplied thereto. The primary source of heat for determining the overall temperature of the mixture is the temperature of the partial flow coming from the burning chamber which emits sufficient heat in the nodulising zone to give the mixture of the two flows a reaction temperature of typically 1400—1500°C. The retention time of the material in the nodulising zone will allow for the final reaction of the mixture.

With this method and apparatus, it is possible to transport each of the two partial flows entirely through stationary plant installations as far as the nodulising zone, while movement of the mixture through the nodulising zone, which forms the so-called sticking temperature area, prevents any significant clogging.

The nodulising zone may impart a rotary component to the mixture to assist transportation of the mixture through the zone and, furthermore the nodulising zone may be provided by a very short rotary kiln which may be used in some cases to maintain the reaction temperature.

The one material flow is preferably suspended in spent cooling air when fed to the burning chamber. The stationary burning chamber may be a shaft-like chamber, or a cyclone burner. In the latter case, the cyclone burner will act both as the burning chamber and as the separator in which the burnt material is separated from the smoke gases before being fed to the nodulising zone. The smoke gases from which the burnt material is separated before being fed to the nodulizing zone, is preferably fed to the precalcination zone for use as combustion air where it is used to assist in precalcining further raw material.

Pipes feeding spent cooling air from the cooler to the burning and/or the precalciner, may be provided with movable dampers for regulating the gas streams.

The preheated and precalcined material may be divided into the two subsidiary material flows by the use for example of a splitting gate. Alternatively, the two subsidiary flows may be provided by the use of a two string preheater and precalciner working in parallel.

Two examples of a method and apparatus in accordance with the present invention are illustrated in the accompanying diagrammatic drawings, in which:—

Figure 1 shows one example with the reaction zone provided by a shaft-like chamber; and

Figure 2 shows another example with a reaction zone provided by a cyclone burner.

In the figures the same reference numerals are used for identical parts of the apparatus.

Raw material is fed to a preheated installation 1 at an inlet 2. Preheated material leaves the preheater 1 via a pipe 11 and is fed to a precalciner 3, directly and/or via a pipe 11a and a riser pipe 16. Fuel is fed at 15 to the precalciner 3 and combustion air is supplied through the pipe 16 and a pipe 18. Precalcined material leaves the precalciner 3 in suspension via pipe 10 and is separated from hot smoke gases in a separator 4. The hot smoke gases are fed to the preheater installation 1 via a pipe 9 and drawn through the preheater by a fan 24 in an exhaust pipe 23.

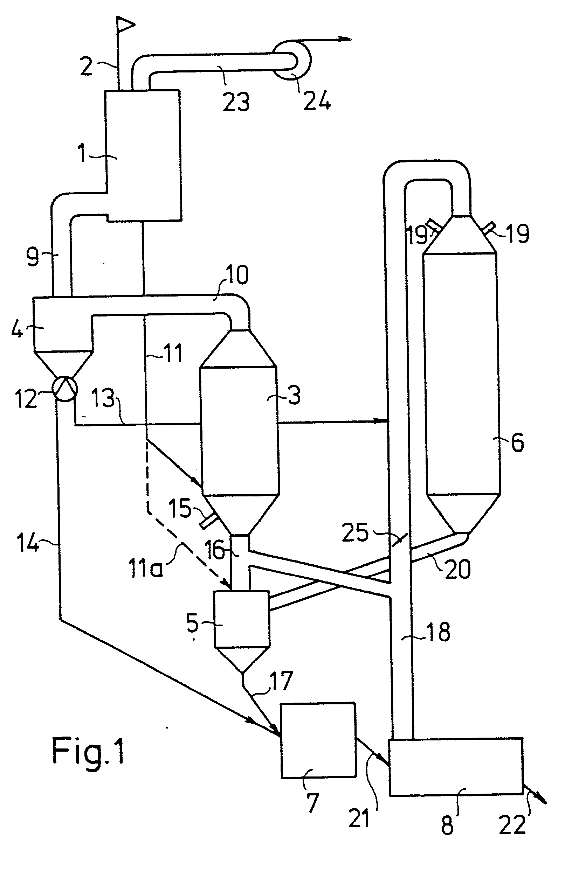

Separated, precalcined material is, at a splitting gate 12 immediately after the separator 4, divided into two subsidiary flows. One of these flows, amounting to 25—75% of the total is, via a pipe 13, led to the pipe 18 for suspension in spent cooling air from a cooler 8. The suspension is fed to a vertical, tubular or shaft-like burning or reaction chamber 6 (Figure 1) for burning and melting the material, the chamber having fuel inlets and burners 19. Melted material and smoke gases leave the reaction chamber 6 through a pipe 20 leading to a cyclone 5 in which the melt is separated from the smoke gases. The latter are fed as hot combustion air to the precalciner 3 via the pipe 16 as mentioned above, whereas the melt, via a pipe 17, is fed to a rotating nodulisation drum 7. The other subsidiary, precalcined, powdery material flow, amounting to 75—25% of the total is, via the splitting gate 12 and a pipe 14, fed directly to the inlet of the drum 7 to be mixed in the drum with the melt. This mixing prevents the risk of sticking and clogging of the melt during its treatment in the drum 7 and the heat proper contained in the melt and in the subsidiary second material flow respectively ensures that the final reaction in the form of nodulisation of the product in the drum 7 takes· place. The product leaves the drum 7 through a pipe 21 and is fed to the cooler 8, from which it leaves as the final product at 22.

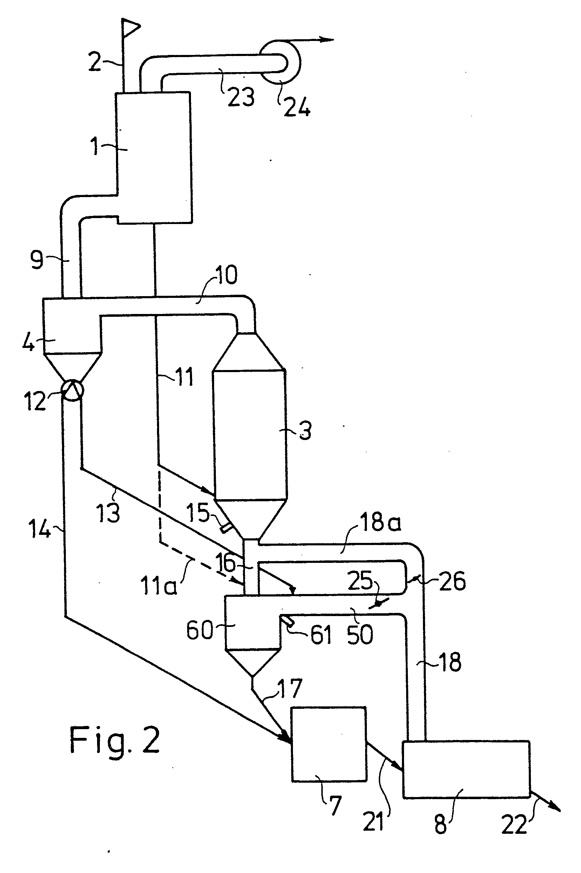

In the example shown in Figure 2 the reaction zone for burning and melting the treated material is a cyclone burner 60 instead of the shaft-like chamber 6. The cyclone burner 60 has a fuel inlet and a burner installation 61, and precalcined material to be treated in the reaction zone is fed to an upper part 50 of the pipe 18 for suspension here in spent cooling air from the cooler 8 before being fed to the cyclone burner 60. Also, in this case the spent cooling air acts as combustion air both in the cylone burner 60, and in the precalciner 3 to which it is led directly through a pipe 18a.

Movable dampers 25 and 26 are used for regulating the combustion air supply to the reaction zone 6,50, and the precalciner 3.

## Claims

1. A method of treating granular or pulverous raw material, the method comprising preheating and precalcining the raw material in suspension; and separating the precalcined material from smoke gases; and providing two separate subsidiary flows of precalcined material characterised by feeding one of the subsidiary flows to a stationary burning chamber (6,60) for burning in suspension and at least partial melting of the material; separating this material from smoke gases and feeding it to a nodulising zone (7); feeding the other subsidiary material flow to the nodulising zone (7) and mixing it with the material from the burning chamber (6,60) whereby the mixed material is subjected to a final reaction and nodulisation during its retention in the nodulising zone (7); and feeding the material from the nodulising zone to a cooler (8).

2. A method according to claim 1, wherein the one material flow is suspended in spent cooling air when fed to the burning chamber (6,60).

3. A method according to claim 1 or claim 2, wherein the smoke gases from which the burner material is separated before being fed to the nodulising zone (7), are used to assist in precalcining further raw material.

4. A method according to any of claims 1 to 3, wherein the one subsidiary flow constitutes 25—75% of the total of the one and the other subsidiary flows.

5. A plant for carrying out a method according to claim 1, the plant comprising means (1,3) for preheating and precalcining the raw material; means (4) for separating the precalcined material from smoke gases; and means (12) for providing the two separate subsidiary material flows characterised by means (13,18) for leading the one subsidiary flow to a stationary burning chamber (6,60); means (5,60) for separating the material from smoke gases and feeding it to a rotating nodulisationn chamber (7); means (14) for leading the other subsidiary flow directly to the nodulisation chamber (7) for mixing with the material from the burning chamber (6,60); and means (21) for leading the nodulised product from the nodulisation chamber (7) to a cooler (8).

6. A plant according to claim 5, wherein the stationary burning chamber is a shaft-like chamber (6).

7. A plant according to claim 6, wherein the means for separating burnt material from smoke gases is a cyclone (5).

8. A plant according to claim 5, wherein the stationary burning chamber comprises a cylcone burner (60), the cyclone burner also providing the means for separating the burnt material from smoke gases.

9. A plant according to any of claims 5 to 8, wherein a splitting gate (12) is provided to divide the preheated and precalcined material into the two subsidiary material flows.

10. A plant according to any of claims 5 to 8, the plant having a two string preheater and precalciner working in parallel to provide the two subsidiary flows.

**Revendications**

1. Procédé de traitement d'une matière première granulaire ou pulvérulente, le procédé comprenant le préchauffage et la calcination préalable de la matière première en suspension, et la séparation de la matière calcinée préalablement des gaz des fumées, et la formation de deux courants secondaires séparés de la matière calcinée préalablement, caractérisé par la transmission de l'un des courants secondaires à une chambre fixe de combustion (6,60) afin qu'il brûle en suspension et assure une fusion au moins partielle de la matière, la séparation de cette matière des gaz des fumées et sa transmission à une zone de formation de nodules (7), la transmission de l'autre courant secondaire de matière à la zone de formation de nodules (7) et son mélange avec la matière provenant de la chambre de combustion (6,60) si bien que la matière mélangée est soumise à une réaction finale et à une mise sous forme de nodules pendant qu'elle est retenue dans la zone de formation de nodules (7), et la transmission de la matière de la zone de formation de nodules à un refroidisseur (8).

2. Procédé selon la revendication 1, dans lequel le premier courant de matière est en suspension dans de l'air usé de refroidissement lorsqu'il est transmis à la chambre de combustion (6,60).

3. Procédé selon l'une des revendications 1 et 2, dans lequel les gaz des fumées dont la matière brûlée est séparée avant d'être transmise à la zone de formation de nodules (7) sont utilisés afin qu'ils facilitent la calcination préalable d'une quantité supplémentaire de matière première.

4. Procédé selon l'une quelconque des revendications 1 à 3, dans lequel le premier courant secondaire constitue 25 à 75% du total du premier et de l'autre courant secondaire.

5. Installation destinée à la mise en oeuvre d'un procédé selon la revendication 1, l'installation comprenant un dispositif (1,3) de préchauffage et de calcination préalable de la matière première, un dispositif (4) de séparation de la matière calcinée préalablement des gaz des fumées, et un dispositif (12) destiné à former les deux courants secondaires séparés de matière, caractérisée par un dispositif (13,18) destiné à transmettre le premier courant secondaire à une chambre fixe de combustion (6,60), un dispositif (5,60) de séparation de la matière des gaz des fumées et de transmission de celle -ci à une chambre rotative de formation de nodules (7), un dispositif (14) destiné à transmettre l'autre courant secondaire directement à la chambre de formation de nodules (7) afin qu'il se mélange à la matière provenant de la chambre de combustion (6,60), et un dispositif (21) destiné à transmettre le produit sous forme de nodules de la chambre de formation de nodules (7) à unrefroidisseur (8).

6. Installation selon la revendication 5, dans laquelle le chambre fixe de combustion est une chambre (6) analogue à une cuve.

7. Installation selon la revendication 6, dans laquelle le dispositif de séparation de la matière brûlée des gaz des fumées est un cyclone (5).

8. Installation selon la revendication 5, dans laquelle la chambre fixe de combustion comprend un brûleur à cyclone (60) qui constitue aussi le dispositif destiné à séparer la matière brûlée des gaz des fumées.

9. Installation selon l'une quelconque des revendications 5 à 8, dans laquelle un volet répartiteur (12) est disposé afin qu'il répartisse la matière préchauffée et calcinée préalablement dans les deux courants secondaires de matière.

10. Installation selon l'un quelconque des revendications 5 à 8, l'installation étant dotée de deux ensembles d'appareils à préchauffeur et de calcination préalable qui travaillent en parallèle pour fournir les deux courants secondaires.

## Patentansprüche

1. Verfahren zur Behandlung von körnigem oder pulverförmigem Rohmaterial, bei dem das Rohmaterial in Suspension vorerwärmt und vorkalziniert und das vorkalzinierte Material aus den Rauchgasen abgeschieden wird und zwei separate Hilfsströme vorkalzinierten Materials gebildet werden, gekennzeichnet durch Zuführen eines der Hilfströme zu einer stationären Brennkammer (6, 60) zum Brennen in Suspension und zum mindestens teilweisen Schmelzen des Materials, durch Abscheiden dieses Materials aus den Rauchgasen und Zuführen zu einer Agglomerierungszone (7), durch Zuführen des anderen Material-Hilfsstroms zu der Agglomerierungszone (7) und Vermischen mit dem Material aus der Brennkammer (6, 60), wobei das vermischte Material einer abschließenden Reaktion und Agglomeration während seines Zurückhaltens in der Agglomerierungszone (7) unterzogen wird, und durch Zuführen des Materials aus der Agglomerierungszone zu einem Kühler (8).

2. Verfahren nach Anspruch 1, dadurch gekennzeichnet, daß der eine Materialstrom in verbrauchter Kühlluft suspendiert wird, während er der Brennkammer (6, 60) zugeführt wird.

3. Verfahren nach Anspruch 1 oder 2, dadurch gekennzeichnet, daß die Rauchgase, aus denen das gebrannte Material abgeschieden wird, bevor es der Agglomerierungszone (7) zugeführt wird, zur Unterstützung des Kalzinierens weiterer Rohmaterials verwendet wird.

4. Verfahren nach einem der Ansprüche 1 bis 3, dadurch gekennzeichnet, daß der eine Hilfsstrom in 25 bis 75% der Gesamtheit des einen und des anderen Hilfsstroms besteht.

5. Anlage zur Durchführung des Verfahrens nach Anspruch 1, mit Mitteln (1, 3) zum Vorerwärmen und Vorkalzinieren des Rohmaterials, mit Mitteln (4) zum Abscheiden des vorkalzinierten Materials aus Rauchgasen und mit Mitteln (12) zur Bildung von zwei separaten Material-Hilfsströmen, gekennzeichnet durch Mittel (13, 18) zur Zuführung des einen Hilfsstroms zu einer stationären Brennkammer (6, 60), durch Mittel (5, 60) zum Abscheiden des Materials aus den Rauchgasen und zum Zuführen zu einer sich drehenden Agglomerierungskammer (7), durch Mittel (14) zur Führung des anderen Hilfsstroms direkt zu der Agglomerierungskammer (7) zum Vermischen mit dem Material der Brennkammer (6, 60) und durch Mittel (21) zur Führung des agglomerierten Produkts aus der Agglomerierungskammer (7) zu einem Kühler (8).

6. Anlage nach Anspruch 5, dadurch gekennzeichnet, daß die stationäre Brennkammer eine schachtartige Kammer (6) ist.

7. Anlage nach Anspruch 6, dadurch gekennzeichnet, daß die Mittel zum Abscheiden des gebrannten Materials aus den Rauchgasen in einem Zyklon (5) bestehen.

8. Anlage nach Anspruch 5, dadurch gekennzeichnet, daß die stationäre Brennkammer in einem Zyklonbrenner (60) besteht, der auch die Mittel zum Abscheiden des gebrannten Materials aus den Rauchgasen bildet.

9. Anlage nach einem der Ansprüche 5 bis 8, dadurch gekennzeichnet, daß ein Aufteilungstor (12) zur Aufteilung des vorerwärmten und vorkalzinierten Materials in die beiden Material-Hilfsströme vorgesehen ist.

10. Anlage nach einem der Ansprüche 5 bis 8, dadurch gekennzeichnet, daß die Anlage über zwei Strangvorwärmer und -vorkalzinatoren verfügt, die parallel arbeiten, um die beiden Hilfsströme zu bilden.

Fig.1

Fig. 2